# EUROPEAN PATENT APPLICATION

(11) **EP 3 418 964 A1**
(43) Date of publication of application: **26.12.2018**
(21) Application number: 18181259.5
(22) Date of filing: 20.05.2011
(51) Int. Cl.: G06Q 30/00

(54) **WEB INTEGRATED POINT-OF-SALE SYSTEM**

(62) Divisional of application: 11866364.0
(71) Applicant: Imidus Technologies, Inc., Fairfax, Virginia 22030 (US)
(72) Inventor: IM, Sung, Bin, Oakton, VA 22124 (US)
(74) Representative: CMS Cameron McKenna Nabarro Olswang LLP

(57) **Abstract**

System for synchronizing and integrating the reservation data, order data, and ecommerce data, gift card data, and/or loyalty points data residing in a POS device with that of a merchant's website and synchronizing data residing in a website database to the POS device is disclosed. The system includes a POS device to host a POS application, the POS application having a POS database layer, and a web server to host a website application, the website application including a website database layer. Web server hosts a publicly accessible website and the website application processes data inputs in the website into the website database layer, and the POS application communicates with the website application to harmonize the website database layer and the POS database layer via Internet protocols. The system can be used to integrate a restaurant or other merchant's POS reservation, ordering, and e- commerce systems with those provided via the website.

## Description

### COPYRIGHT NOTIFICATION

This application includes material which is subject to copyright protection. The copyright owner has no objection to the facsimile reproduction by anyone of the patent disclosure, as it appears in the Patent and Trademark Office files or records, but otherwise reserves all copyright rights whatsoever.

### BACKGROUND OF THE INVENTION

### Field of the Invention

The present invention relates to point-of-sale (POS) systems, and more particularly, to a system synchronizing a point-of-sale system to a website for reservations, order placement and electronic commerce.

### Description of the Related Art

More and more restaurants are allowing customers to schedule reservations online over the Internet. For example, a website may allow a user to look up available times at a particular restaurant and then enter sufficient information in order to reserve an available time. However, most of these websites operate as stand-alone software applications separate from the restaurant's day-today equipment and computer systems. The website collects a potential customer's appointment request and transmits it to a restaurant, usually by email, where it has to be entered into the restaurants own reservation system. The restaurant must verify the accuracy of the information and confirm time availability before a confirmation is provided to the potential customer. The potential customer is thus denied a real-time confirmation, and the whole method is somewhat cumbersome, inefficient, and prone to errors.

Some overcome these difficulties by consolidating all of the restaurant's reservation system online. For example, when the online reservation website is run by a 3rd party (the website operator), the website operator may also host a reservation management process service. Then, instead of the restaurant maintaining its own reservation system and inputting data transmitted from the website, the reservation system is hosted online and both the customer and the restaurant access it via the internet. This allows a potential customer real-time access to the restaurant's availability and almost instantaneous reservation confirmations. However, this also removes the reservation system from the restaurant's control and creates loss of revenue risks when there are outages. The restaurant has to log on or otherwise engage the website operator's reservation system to manage this aspect of its own business. In addition, these online reservation systems are often proprietary, and the website operator imposes fees to the restaurant every time a potential customer makes a reservation through the system.

Moreover, this type of 3rd party setup raises privacy concerns. The website operator usually requires a potential customer to register with its website in order to make a reservation, gathering as much information from the potential client as it can. The website operator also tracks the potential customer's dinning history, spending habits, and emails exchanged between the customer and the website. The website operator may then share this data with others, and may use it to market other products to the customer.

### SUMMARY OF THE INVENTION

The present invention provides a system for synchronizing and integrating the reservation data, order data, and e-commerce data, gift card data, and/or loyalty points data residing in a POS device with that of a merchant's website and synchronizing data residing in a website database to the POS device. Using the system, a customer can, for example, make a reservation at a restaurant on the restaurant's website and see the available time slots in real time. Likewise, an employee of a merchant such as a restaurant may use their wireless smart phone or PDA to view and modify reservation data, order data, item stock data, e-commerce data, and other data types residing in the POS device in real time by connecting the handheld device to the website using the browser of the phone/PDA. Changes to such data made directly at the POS device can also be synchronized to the website in real time. These and other aspects and utilities of the present general inventive concept may be achieved by providing a web-integrated Point- Of-Sale (POS) reservation system, including a POS device to host a POS application, the POS application including a POS database layer, and a web server to host a website application, the website application comprising a website database layer, wherein the web server hosts a publically accessible website and the website application processes data inputs in the website into the website database layer, and wherein the POS application communicates with the website application to harmonize the website database layer and the POS database layer via Internet protocols. The data inputs in the website may include at least one of a customer's information, a reservation request, the customer's gift card number, the customer's loyalty points number, a food purchase order, and an e-commerce transaction. The POS database layer may include at least one of data regarding available times for reservation, loyalty point information for a customer, pending food purchase orders, e-commerce inventories, and price data.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:
FIG 1 is a diagram illustrating software and hardware architecture for applications hosted in a POS device and a web server.
FIG. 2 is a diagram illustrating the harmonization of information between applications in a web server and a POS device.

### DETAILED DESCRIPTION OF THE PREFERRED EMBODIMENT

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

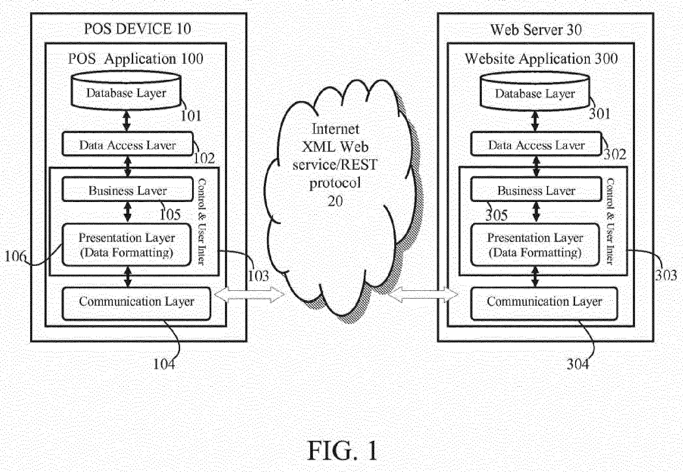

FIG. 1 is a diagram illustrating hardware and software architecture for applications hosted in the Point-Of-Sale (POS) device 10 and the web server 30. The present invention provides two major modules, the POS desktop application 100 and website application 300. There are some common functions between these two modules, including Make Reservation, Purchase Gift Card, Make Takeout / Delivery order. The present invention provides a means to integrate and harmonize between POS device 10 and the website 30. This integration ensures that the two modules can work in a consistent manner.

As illustrated in FIG. 1, the system may include a POS device 10 communicating through Internet protocols 20 with a website server 30. A POS or check out is the location where a transaction occurs. Usually this is the location where a customer pays for the goods and services provided. In the context of a restaurant, the POS is where the customer checks in with the hostess, food orders are entered, and payment is processed.

A POS device comprises a combination of computer hardware, software, and peripherals used to process the restaurants business transactions. The POS device 10 may include one or more computers, a Bar Code Reader (BCR), magnetic stripe reader, or other type of POS indicia scanner for taking credit or debit payments from a customer, an operator display, a customer display, and one or more data entry devices. The POS device 10 can include a wireless device such as a tablet computer (e.g., an iPad or the like), a handheld PDA, a smartphone, or the like, which may be carried with a waiter/waitress and used at the table. In such embodiments, the wireless device would typically be in wireless communication with a conventional server and/or other conventional POS hardware. The POS device 10 can be used to place food orders, manage reservations, and process payments. Depending on the restaurant's setup, the POS device can include various types of equipment and peripherals. For example, the POS device 10 may include a touch screen terminal for data entry, wireless handheld devices to process credit cards and other payment cards, and may be used in conjunction with wireless smart phones, PDAs, and electronic signature capture devices. The POS device 10 may be used to print guest checks, print orders to the kitchen or bar for preparation, process credit cards and other payment cards, and run reports.

A merchant's website is typically a collection of related pages, images, and digital content hosted on at least one web server. The website is accessible to the public over the internet using internet protocols such as HyperText Transfer Protocols.

The web server 30 resides in a computer system separate from the POS device 10, may be geographically distant from the point-of-sale, may be a collection of virtualized servers, and may be at a distinct location or in the cloud. The web server 30 hosts a publically accessible website for the restaurant.

Depending on the restaurant's requirements, different software is loaded on the POS device 10 to manage the desired functionality and peripherals. For the management of the restaurant's web integrated reservation system, two synchronizing applications are loaded into the POS device 10 and a web server 30.

With continued reference to FIG. 1, a POS application 100 may include a database layer 101, a data access layer 102, a control and user interface 103, and a communication layer 104. The control and user interface 103 may include a business layer 105 and a presentation layer 106.

The database layer 101 contains the restaurant's reservation data, including all available times, tables, size of tables, and other reservation-related information. The database layer 101 may also contain information regarding other associated transactions such as reward points associated with a customer, pickup/delivery orders, and payment information. The database layer 101 may be, e.g., a relational database such as Microsoft SQL server, Oracle, or MySQL, inventory (item) data, pickup/delivery data, gift card data, loyalty points data, and customer information are also stored in the database of database layer 101.

The following events may cause the database of database layer 101 to be modified: the purchase of an item at the POS or an e-commerce transaction via the website by a customer; a reservation being placed via the website by a customer; an order for pickup or delivery being placed via the website or via phone-in by the customer to the POS; or the purchase of a gift card at the POS or at the website by a customer. For example, where a customer pays via the POS system for purchase of food at the restaurant, the POS system stores the transaction in the database of database layer 101 through the data access layer 102, and sends the data to the web server 30 via communication layer 104 and the internet using XML Web service communication protocol 20 after formatting the transaction data. Once the website application 300 receives the data and stores the data for subtracting inventory quantity, real time inventory management can be performed.

Business logic is provided in the business layer 105, and includes inventory (item) management, listing items for a customer's order, shopping cart and payment processing, reservation and payment processing, pickup/delivery, gift card issuing and reloading, and customer management for loyalty programs.

With respect to gift card issuing and reloading functionality, and loyalty point program functionality, the inventions taught herein may be combined with the teachings of U.S. Patent Application No. 13/106,572 filed May 12, 2011, the entire disclosure of which is incorporated herein by reference. In the present application, a loyalty point conversion table similar to that taught in Application No. 13/106,572 may be utilized as follows. Both the POS device 10 and the web server 30 can use a loyalty point conversion table residing in the database of either database layer 101 or the database layer 301 to convert a customer's loyalty points to either a monetary value or a goods/services value. For example, a customer making a reservation via a restaurant's web site can be allowed to use loyalty points make a reservation that he would not otherwise be able to make or that he would otherwise be charged a monetary value for. Loyalty points can likewise be charged for priority reservations, and higher numbers of loyalty points can be used to obtain a higher priority or otherwise better reservation.

The communication layer 104 controls communication between the POS website application 100 and the web server website application 300. The POS device 10 and the web server 30 communicate through the Internet using Internet Protocols such as XML Web Service and REST protocols.

As illustrated in FIG. 1, a web server website application 300 may include a database layer 301, a data access layer 302, a control and user interface 303, and a communication layer 304. The control and user interface 303 may include a business layer 305 and a presentation layer 306.

The database of database layer 301 contains up-to-date information regarding available reservation times, and is updated with the customer's reservation information input through the website. The database includes all requested times, party names, and other relevant reservation information. The database of database layer 301 may also contain information regarding other associated transactions such as reward account number, pickup/delivery orders, and payment information. The database of database layer 301 may comprise a relational database such as Microsoft SQL Server, Oracle, or MySQL. Inventory (item) data, Reservation, Pickup/Delivery, Gift card, and Customer information are stored in the database.

The data access layer 302 provides data access services to the database layer 301 for downstream communication and to business layer 305 for upstream communication. The control and user interface 303 defines the website hosted by the web server 30. The control and user interface 303 contains all the necessary web pages and interfaces to receive customer inputs and transmit the same to the database layer 301. The communication layer 304 controls communication between the web server website application 300 and the POS website application 100 using Internet protocols. The communication layer 304 facilitates communications between the disparate Web Server 30 and the POS Device 10 using communication protocols such as XML Web Services and REST. Both the communications layer 304 and the communications layer 104 secure the data using encryption/decryption technology throughout the communication paths.

A customer who has created an account and logged in to the website, rather than using the website as a non-logged-in guest, can be given additional benefits. For example, users who have logged in can be provided with loyalty points for making a reservation or may be able to make a reservation or place an order using loyalty points.

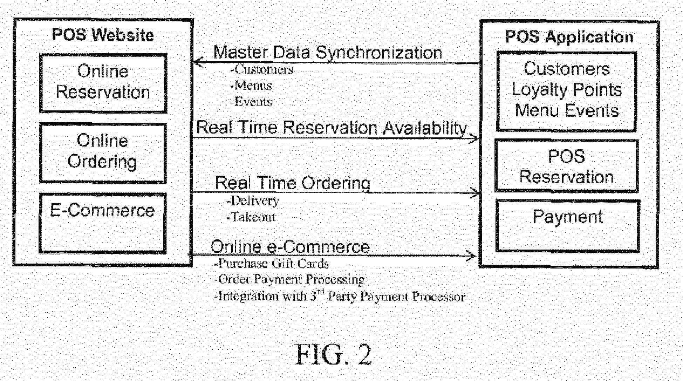

FIG. 2 is a diagram illustrating the harmonization of information between applications in the web server and in the POS device. As was shown in FIG. 1, the website application 300 uses the communication layer 304 to communicate with the communication layer 104 of the POS application 100. Communication between the website application 300 and the POS application 100 allows for real-time harmonization of the database layer 101 and database layer 301. That is, as illustrated in FIG. 2, a customer's online reservation through the website application 300 is entered into the database layer 301. Communication with the POS website application 100 allows integration of this information into the restaurant's reservation database residing in the database layer 101 and updating of the information regarding available times in the database layer 301.

A customer's online ordering or e-commerce purchase entered through the website application 300 is similarly entered into the database layer 301. Communication with the website application 100 allows integration of this information into the restaurant's reservation database residing in the database layer 101 and synchronization. Likewise, when a customer makes a reservation, they can be given the option to pre-pay for their meal. Communication with the website application 100 allows integration of this information into the restaurant's sales database so that when the customer is finished with their meal they are shown as paid-in-full rather than presented with a check to pay.

With reference to FIG. 2, the flow of data synchronization will now be described. There are three types of data that needs to be synchronized between POS and Website. The first is data that originates in the POS device and is pushed to the website. For example, menu items. The second is data that originates in the website and is pushed to the POS. For example, online transactions. The third is data that can flow in either direction. For example, customer data since such data can be created on both sides. The flow of these three types of data will now each be described individually.

With respect to data that originates in the POS device and is pushed to the Website, the following types of data records need to be pushed: Menu Item Category, Menu Item, Reservations, Events, and Daily Specials. Except for the reservation records, this data is master and lookup data, and so most of it does not need to be synchronized immediately. The website administrative user is provided with a function in an administrative console which he can execute 1-2 times per day. This function operates as follows. First, it retrieves a list of new data records and a list of updated records from the POS. Next, for each new record, it retrieves the complete data record and inserts it into the website's database. Finally, for each updated record, it retrieves the updated data record and updates the website database.

With respect to data that originates in the website and is pushed to the POS, reservation and transaction records are the types of data records that fall into this category. Whenever a customer makes a reservation or places an order (Take Out, Delivery), the website application connects with the POS to send the data. The website first checks the connection to POS and, if the connection is down, it displays an alert message that the connection to back office is down and ask the customer to call a toll free phone number as an alternative. If the connection is up, the website sends the data to POS. To ensure that there is no data lost once the payment has been received, the website keeps a local copy of transaction record. Once synchronization is successful, the transaction data record copy on Website may be deleted. This data is newly data generated on the website side for reservations and sales transactions/orders, and should be synchronized immediately.

With respect to bi-directional data that can flow in either direction between the POS application and the POS website, there is only one data record type in this category, and that is the customer data record. Because it can flow in either direction, this data requires special processing. First, whenever there is a new customer record entered into the system on the POS side, it is pushed to the website keeping the same Customer ID on Website. Also, whenever there is a new customer record entered on the website, it is pushed to POS, but the ID itself may change in accordance with customer data records on the POS side. To make this happen, customer data record from the POS side can be pushed once or twice a day by the website administrator. However, customer data records from the website should be pushed immediately to the POS. If there is a change in customer ID on the POS side, the website will receive the new customer ID so that it can update its record.

Because the two modules, the POS application and the Website, are typically developed using two different platforms, for example ,NET/C#/MySQL and PHP/Zend/MySQL, respectively, the integration should be based on industry standards such as SOAP-based Web Services. There may be more than 50 web service based interfaces that are used for this integration in such embodiments. These web services are defined in .NET 4.0 using C++ language and deployed on Microsoft Internet Information Server (IIS). The PHP/Zend web application creates proxies for these Web Service interfaces.

With respect to security, each web service based integration can use basic authentication via username and password requirements. A special "system user account" may be created at the store level, and this can be maintained in a store settings function in the POS. Only those requests that provide credentials for this system user account will be processed.

The embodiments of the present invention can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), and storage media such as carrier waves (e.g., transmission through the Internet).

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents. Examples include the following clauses:
Clause 1 A web integrated Point-Of-Sale (POS) reservation system, comprising:
   a POS device hosting a POS reservation application, the POS application comprising a POS database layer; and,
   a web server hosting a website application, the website application comprising a website database layer;
   wherein the web server hosts a publically accessible website and the website application processes data inputs in the website into the website database layer, and
   wherein the POS application communicates with the website application to two- way synchronization in real time to harmonize the website database layer and the POS database layer using internet protocols;
Clause 2. The POS reservation system of clause 1, wherein the data inputs in the website comprise at least one of a customer's information, a reservation request, a food purchase order, and an e-commerce transaction, gift card data, or loyalty points data.
Clause 3. The POS reservation system of clause 1, wherein the POS database layer comprises at least one of data regarding available times for reservation, loyalty point information for a customer, pending food purchase orders, e-commerce inventories, and price data.
Clause 4. The POS reservation system of clause 1, wherein the website is based on a control and user interface in the website application.
Clause 5. The POS reservation system of clause 1, wherein the POS device comprises a restaurant checkout, ordering, and reservation system.
Clause 6. The POS reservation system of clause 5, wherein the POS device further comprises a wireless handheld device in communication with a server.
Clause 7. The POS reservation system of clause 5, wherein the POS device further comprises an indicia reader for taking credit or debit payments from a customer.
Clause 8. The POS reservation system of clause 6, wherein the wireless handheld device is configured to process credit cards and other payment cards.
Clause 9. The POS reservation system of clause 1, wherein the system is configured to synchronize portions of data in real time and other portions of data in non-real time.
Clause 10. The POS reservation system of clause 1, wherein the POS database layer is configured to store inventory data, pickup/delivery data, gift card data, loyalty points data, and customer information.
Clause 11. The POS reservation system of clause 1, wherein the POS device comprises a business layer for conducting inventory management, listing items for a customer's order, shopping cart and payment processing, reservation and payment processing, pickup/delivery, gift card issuing and reloading, and customer management for loyalty programs.
Clause 12. The POS reservation system of clause 1, wherein the POS device and the web server communicate through the internet using XML Web Service protocols.
Clause 13. The POS reservation system of clause 1, wherein the POS device and the web server communicate through the internet using REST protocols.
Clause 14. The POS reservation system of clause 1, wherein the website application is configured such that a customer who has created and account and logged in to the website is given additional benefits for placing a reservation.
Clause 15. The POS reservation system of clause 14, wherein the additional benefits comprise loyalty points.
Clause 16. The POS reservation system of clause 14, wherein the additional benefits comprise a prioritized reservation.
Clause 17. The POS reservation system of clause 1, wherein the website application is configured to provide a customer with an option to pre-pay for a meal when placing a reservation.
Clause 18. The POS reservation system of clause 1, wherein the web server and the POS device are each configured to distinguish between data that originates in the POS device and is pushed to the website, data that originates in the website and is pushed to the POS, and data that can flow in either direction, and to treat each of the three types of data differently.

## Claims

1. A web integrated Point-Of-Sale (POS) reservation system, comprising:
a POS device (10) hosting a POS application (100), the POS application (100) comprising logic for processing payment from a customer at a point of sale, and logic for handling reservations at the point of sale, and a POS database layer (101), the POS database layer (101) comprising order data, item stock data, and e-commerce data; and,
a web server (30) hosting a website application (300), the website application (300) comprising a website database layer (301);
wherein the web server (30) hosts a publicly accessible website and the website application (300) processes data inputs in the website into the website database layer (301); and
wherein the POS application (100) communicates with the website application (300) to perform two-way synchronization in real time to harmonize the website database layer (301) and the POS database layer (101) using internet protocols;
wherein the web server (30) and the POS device (10) are each configured to distinguish between data that originates in the POS device (10) and is pushed to the website (30), data that originates in the website (30) and is pushed to the POS (10), and data that can flow in either direction, and to treat each of the three types of data differently.

2. The POS reservation system of claim 1, wherein the data inputs in the website (30) comprise at least one of a customer's information, a reservation request, a food purchase order, and an e-commerce transaction, gift card data, or loyalty points data.

3. The POS reservation system of claim 1, wherein the POS databaselayer (101) is a relational database comprising at least one of data regarding available times for reservation, loyalty point information for a customer, pending food purchase orders, e-commerce inventories, and price data.

4. The POS reservation system of claim 1, wherein the website is based on a control and user interface in the website application (300).

5. The POS reservation system of claim 1, wherein the POS device (10) comprises a restaurant checkout, ordering, and reservation system.

6. The POS reservation system of claim 5, wherein the POS device (10) further comprises a wireless handheld device in communication with a server.

7. The POS reservation system of claim 5, wherein the POS device (10) further comprises an indicia reader for taking credit or debit payments from a customer.

8. The POS reservation system of claim 6, wherein the wireless handheld device is configured to process credit cards and other payment cards.

9. The POS reservation system of claim 1, wherein the system is configured to synchronize portions of data in real time and other portions of data in non-real time.

10. The POS reservation system of claim 1, wherein the POS database layer (101) is configured to store inventory data, pickup/delivery data, gift card data, loyalty points data, and customer information.

11. The POS reservation system of claim 1, wherein the POS device (10) comprises a business layer (105) for conducting inventory management, listing items for a customer's order, shopping cart and payment processing, reservation and payment processing, pickup/delivery, gift card issuing and reloading, and customer management for loyalty programs.

12. The POS reservation system of claim 1, wherein the POS device (10) and the web server communicate through the internet using XML Web Service protocols or REST protocols.

13. The POS reservation system of claim 1, wherein the website application (300) is configured such that a customer who has created an account and logged in to the website is given additional benefits for placing a reservation.

14. The POS reservation system of claim 1, wherein the website application (300) is configured to provide a customer with an option to pre-pay for a meal when placing a reservation.

15. The POS reservation system of claim 3, configured such that, when a payment is processed via the logic for processing payment, a transaction relating to the payment is stored in the relational database, and data about the transaction is sent to the web server (30) via a communication layer.
